Europäisches Patentamt

European Patent Office

Office européen des brevets

(11) Veröffentlichungsnummer: **0 226 708**
**A2**

## (12) EUROPÄISCHE PATENTANMELDUNG

(21) Anmeldenummer: **86111983.2**

(22) Anmeldetag: **29.08.86**

(51) Int. Cl.⁴: **H 04 M 1/66**

(30) Priorität: **18.12.85 DE 3544687**

(43) Veröffentlichungstag der Anmeldung:
**01.07.87 Patentblatt 87/27**

(84) Benannte Vertragsstaaten:
**AT BE CH DE FR GB IT LI LU NL SE**

(71) Anmelder: **ROBERT BOSCH GMBH**
**Postfach 50**
**D-7000 Stuttgart 1(DE)**

(72) Erfinder: **Wazeck, Jürgen, Dr.**
**Wiltinger Strasse 20 c**
**D-1000 Berlin 28(DE)**

(72) Erfinder: **Rosenegger, Wolfgang**
**Borstellstrasse 14**
**D-1000 Berlin 41(DE)**

(74) Vertreter: **Schmidt, Hans-Ekhardt**
**Robert Bosch GmbH Geschäftsbereich Elektronik Patent-**
**und Lizenzabteilung Forckenbeckstrasse 9-13**
**D-1000 Berlin 33(DE)**

(54) Elektrische Sperrvorrichtung zum Sperren der von einem Fernsprechapparat abgehenden Gespräche.

(57) Es wird eine elektrische Sperrvorrichtung vorgeschlagen, die zum Sperren der von einem Fernsprechapparat abgehenden Gespräche dient. Die elektrische Sperrvorrichtung (SV) kann jederzeit nachträglich in eine Anschlußleitung (L) zwischen einem Fernsprechapparat (F) und einer Vermittlungsstelle (V) eingeschleift werden. Sie enthält einen Sperrsignalgeber (SG), der im eingeschalteten Zustand die elektrische Sperrvorrichtung zur Wirkung kommen läßt.

Fig. 1

EP 0 226 708 A2

86 11 1983.2

**0226708**

50/85
EK/PLI Scht-Li
11.12.1985

ROBERT BOSCH GMBH, 7000 Stuttgart 1

Elektrische Sperrvorrichtung zum Sperren der
von einem Fernsprechapparat abgehenden Gespräche

Stand der Technik

Die Erfindung geht von einer elektrischen Sperrvorrichtung nach der Gattung
des Anspruchs 1 aus.

Es ist eine elektrische Sperrvorrichtung bekannt (Unterhaltungs-Elektronik,
1984, Nr. 12, Seite 26), die bei einem Fernsprechapparat mittels eines
Schlüsselschalters das Wählen, Einspeichern und Programmieren verhindern
kann. Im gesperrten Zustand können mit dem Fernsprechapparat keine abgehenden Gespräche, sondern nur noch ankommende Gespräche geführt werden. Der
Schlüsselschalter überbrückt in der Regel den Wahlimpulskontakt des Fernsprechapparates. Die bekannten elektrischen Sperrvorrichtungen der vorstehend beschriebenen Art sind in den Fernsprechapparat integriert, so daß
ein nachträglicher Einbau nicht in Frage kommt. Diese elektrischen Sperrvorrichtungen sind im übrigen auch nicht dazu geeignet, eine automatische
Sperrung vorzunehmen, wenn die Netzspannung für eine damit betriebene Zusatzeinrichtung für den Fernsprechapparat ausfällt. Die Zusatzeinrichtung
ist beispielsweise ein durch eine Gebührenkarte betätigbares Freischaltgerät, bei dessen Ausfall keine Gebühreneinheiten eingezogen würden.

Vorteile der Erfindung

Die erfindungsgemäße Sperrvorrichtung mit den kennzeichnenden Merkmalen
des Anspruchs 1 hat den Vorteil, daß sie auch nachträglich an einem Fernsprechapparat installiert werden kann, bei dem abgehende Verbindungen
gesperrt werden sollen.

...

Durch die in den Unteransprüchen aufgeführten Maßnahmen sind vorteilhafte Weiterbildungen und Verbesserungen der im Anspruch 1 angegebenen elektrischen Sperrvorrichtung möglich. Besonders vorteilhaft ist eine erfindungsgemäße elektrische Sperrvorrichtung, bei der der Sperrsignalgeber mit einem mit dem Stromnetz verbundenen Netzspannungsausfall-Detektor versehen ist, der bei einem Ausfall der Netzspannung über den Sperrsignalgeber und den Rufsignalauswerter den Schalter des zweiten Relais öffnet. Eine derartige Sperrvorrichtung gestattet es, die Sperrung dann vorzunehmen, wenn bei einer zu dem Fernsprechapparat gehörenden Zusatzeinrichtung die Netzspannung ausfällt.

## Zeichnung

Ausführungsbeispiele der Erfindung sind in der Zeichnung an Hand mehrerer Figuren dargestellt und in der nachfolgenden Beschreibung näher erläutert. Die Zeichnung zeigt in

Fig. 1    ein Blockschaltbild einer erfindungsgemäßen elektrischen Sperrvorrichtung in einer ersten Ausführungsform,

Fig. 2    ein Blockschaltbild einer erfindungsgemäßen elektrischen Sperrvorrichtung in einer zweiten Ausführungsform,

Fig. 3    ein Blockschaltbild einer erfindungsgemäßen elektrischen Sperrvorrichtung ohne Verwendung eines Schleifenrelais,

Fig. 4A   ein Signalschema zur Erläuterung der Sperrvorrichtung nach Fig. 3 und

Fig. 4B   ein Signalschema zur Erläuterung einer alternativen Sperrvorrichtung mit Schleifenrelais.

## Beschreibung der Erfindung

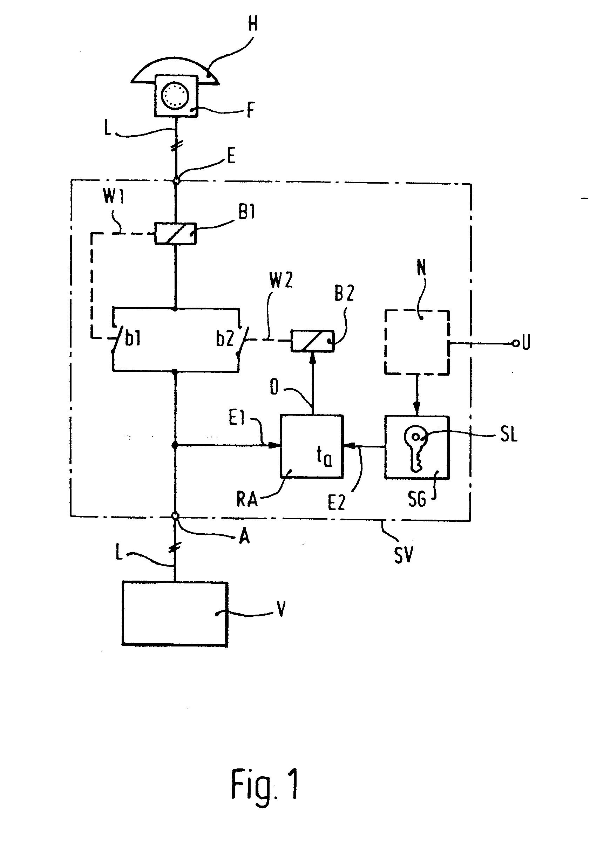

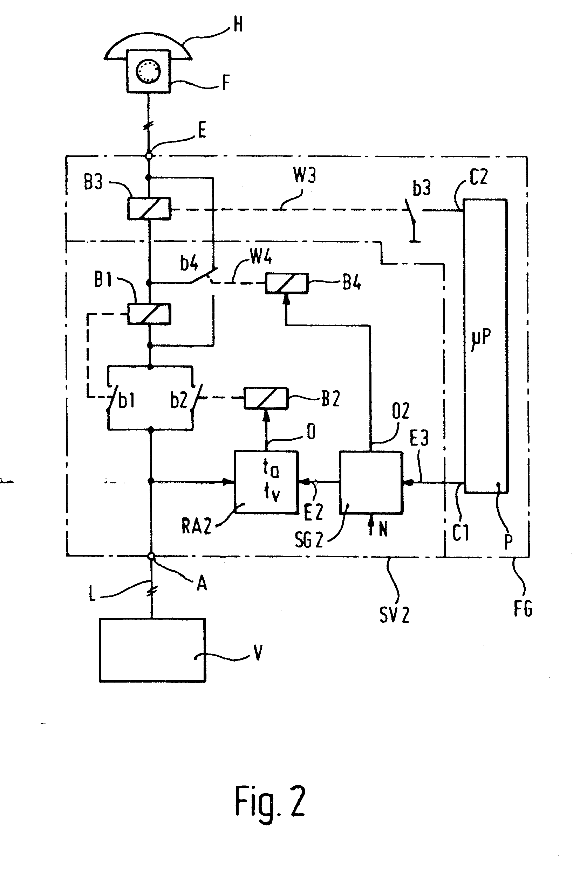

In Fig. 1 bezeichnet F einen Fernsprechapparat, der über eine Anschlußleitung L mit einer Vermittlungsstelle V, das ist vorzugsweise eine Nebenstellenanlage, verbunden ist. In die die a- und b-Ader enthaltende

...

Anschlußleitung L ist eine elektrische Sperrvorrichtung SV eingeschleift, deren Eingang E mit dem Fernsprechapparat und deren Ausgang A mit der Vermittlungsstelle in Verbindung steht. Zwischen dem Eingang E und dem Ausgang A liegt eine Reihenschaltung aus einem ersten Relais B1, das ist ein Schleifenrelais, und einer Parallelschaltung aus zwei im Ruhezustand geöffneten Schaltern b1 und b2. Der erste Schalter b1 wird von dem ersten Relais B1 gesteuert - vgl. in Fig. 1 gestrichelt eingezeichnete Wirkverbindung W1 - und der zweite Schalter b2 durch das zweite Relais B2 - vgl. gestrichelt dargestellte Wirkverbindung W2 -. Das zweite Relais B2 ist mit einem Ausgang 0 eines Rufsignalauswerters RA verbunden, dessen erster Eingang E1 mit dem Ausgang A der elektrischen Sperrvorrichtung SV und dessen zweiter Eingang E2 mit einem Sperrsignalgeber SG verbunden ist. Der Sperrsignalgeber ist vorzugsweise durch einen Schlüsselschalter SL betätigbar. Er kann aber auch, wie in Fig. 1 gestrichelt angedeutet, durch einen Netzspannungsausfall-Detektor N betätigt werden, der einen Anschluß für die Netzspannung U aufweist und dessen Ausgang über den Sperrsignalgeber mit dem zweiten Eingang E2 des Rufsignalauswerters RA verbunden ist.

Die Wirkungsweise der vorstehend beschriebenen Schaltung ist folgende.

Soll der Fernsprechverkehr in der normalen Weise, das heißt ohne Sperrung abgehender Gespräche, stattfinden, so ist der Sperrsignalgeber SG mittels des Schlüsselschalters SL ausgeschaltet. In diesem Zustand liefert der Sperrsignalgeber SG an den zweiten Eingang E2 des Rufsignalauswerters RA eine erste Ausgangssignalspannung, die den Rufsignalauswerter veranlaßt, an seinem Ausgang 0 eine erste Steuersignalspannung abzugeben, die das zweite Relais B2 in den erregten Zustand steuert, in welchem es den zweiten Schalter b2 schließt. Da die Stromschleife zwischen der Vermittlungsstelle V und dem Fernsprechapparat F zu diesem Zeitpunkt noch geöffnet ist, ist das erste Relais B1 stromlos und der erste Schalter b1 geöffnet. Von der Vermittlungsstelle V ankommende Rufsignale gelangen über den zweiten, geschlossenen Schalter b2 zum Fernsprechapparat und werden dort hörbar gemacht. Ist ein Gespräch beabsichtigt, so wird der Handapparat H des Fernsprechapparates F abgenommen und damit die Stromschleife geschlossen. In analoger Weise sind auch von dem Fernsprechapparat F abgehende Rufe und Gespräche möglich.

...

Soll der Fernsprechapparat F für abgehende Gespräche gesperrt werden, so wird mittels des Schlüsselschalters SL der Sperrsignalgeber eingeschaltet. Im Sperrzustand gibt dieser an den Eingang E2 eine zweite Ausgangssignalspannung ab, die den Rufsignalauswerter RA veranlaßt, an seinem Ausgang O eine zweite Steuersignalspannung abzugeben, die das zweite Relais B2 in den stromlosen Zustand steuert. Dadurch wird der zugehörige Schalter b2 geöffnet. In diesem Zustand sind somit beide Schalter b1, b2 geöffnet, so daß kein abgehendes Gespräch geführt werden kann. Von der Vermittlungsstelle V an der elektrischen Sperrvorrichtung SV eintreffende Rufsignale können zwar nicht an den Fernsprechapparat F gelangen, sie treffen jedoch an dem ersten Eingang E1 des Rufauswerters ein. Dieser gibt bei jedem Rufsignal an seinem Ausgang O die erste Steuersignalspannung ab und erregt das zweite Relais B2, dessen zweiter Schalter b2 dadurch geschlossen wird. Die Pausen zwischen den einzelnen Rufsignalen überbrückt der eine Verzögerung $t_a$ aufweisende Rufsignalauswerter RA. Dadurch bleibt der zweite Schalter b2 auch in den Pausen zwischen den Rufsignalen geschlossen und leitet diese an den Fernsprechapparat F weiter. Damit ist die Verbindung zwischen der Vermittlungsstelle V und dem Fernsprechapparat F hergestellt. Wird dann der Handapparat H abgenommen, so wird die Stromschleife geschlossen und das erste Relais B1 erregt. Dieses schließt den ersten Schalter b1 und überbrückt den zweiten Schalter b2. Wird das zweite Relais B2 nach der Verzögerungszeit $t_a$ stromlos, so bleibt die Stromschleife über den ersten Schalter b1 geschlossen.

Tritt während einer bestehenden Verbindung eine Schleifenunterbrechung auf, zum Beispiel durch eine Betätigung des Gabelumschalters oder durch Auslösen von Wahlimpulsen, so wird das erste Relais B1 stromlos und der Schalter b1 geöffnet. Auf diese Weise wird die Verbindung von dem Fernsprechapparat F zu der Vermittlungsstelle V unterbrochen. Abgehende Gespräche werden damit verhindert.

Das erste Relais B1 ist vorzugsweise mit einer Abfallverzögerung versehen, um Speisestromlücken zu überbrücken. Das zweite Relais B2 ist vorzugsweise ein Stromstoßrelais. Das erste Relais B1 und das zweite Relais B2 können durch elektronische Schalter realisiert sein.

...

Die Wirkungsweise des in Fig. 1 mit N bezeichneten Netzspannungsausfall-
Detektors ist folgende.

Ist an dem Eingang des Netzspannungsausfall-Detektors N die Netzspannung
vorhanden, so gibt der Sperrsignalgeber SG an den zweiten Eingang E2 des
Rufsignalauswerters RA die erste Ausgangssignalspannung ab und veranlaßt
dadurch, daß das zweite Relais B2 erregt und der zugehörige zweite Schalter
b2 geschlossen ist. Bei einem Ausfall der Netzspannung steuert der Netzspannungsausfall-Detektor N den Sperrsignalgeber SG derart, daß er an den
zweiten Eingang E2 des Rufsignalauswerters RA die zweite Ausgangssignalspannung abgibt, die in weiter oben beschriebener Weise für ein Öffnen des
zweiten Schalters b2 sorgt. Damit befindet sich die Sperrvorrichtung SV im
Sperrzustand für abgehende Gespräche.

In Fig. 2 bezeichnet SV2 eine andere Ausführungsform einer erfindungsgemäßen Sperrvorrichtung, die ebenso wie ein Freischaltgerät FG zwischen einem
Fernsprechapparat F und einer Vermittlungsstelle V liegt. Das Freischaltgerät ist in bekannter Weise durch Gebührenkarten betätigbar, auf denen
Werteinheiten gespeichert sind. Die Werteinheiten werden entsprechend den
während eines Telefonats über die Anschlußleitung L eintreffenden Gebührenimpulsen abgebucht.

In der Sperrvorrichtung SV2 haben die Relais B1 und B2 sowie die zugehörigen Schalter b1 und b2 die gleiche Funktion wie in dem Ausführungsbeispiel
nach Fig. 1. Das Freischaltgerät FG enthält jedoch grundsätzlich ebenfalls
ein Schleifenrelais, das in Fig. 2 als drittes Relais B3 bezeichnet ist und
in Reihe zu dem ersten Relais B1 liegt. Durch das zusätzliche Schleifenrelais B3, das einen dritten Schalter b3 steuert, würde unter anderem die
Einfügungsdämpfung den nach den Bestimmungen der Deutschen Bundespost festgelegten Wert überschreiten. Aus diesem Grunde ist noch ein weiteres
Relais B4 vorgesehen, das mit einem Ausgang O2 des Sperrsignalgebers SG2
verbunden ist und einen vierten Schalter b4 steuert (vgl. Wirkverbindung W4).
Der vierte Schalter b4 ist ein Umschalter, der im Ausgangszustand, das heißt
bei fehlender Betriebsspannung, das dritte Relais B3 überbrückt. Durch den
Schalter b4 bleibt die Einfügungsdämpfung im Normalbetrieb und auch in dem
weiter unten beschriebenen Sperrbetrieb annähernd gleich. Die Funktion des

...

Schlüsselschalters SG gemäß Fig. 1 übernimmt beim Freischaltgerät FG eine Mikroprozessorschaltung P, die in Abhängigkeit von dem Gebührenstand der Gebührenkarte die Sperrung abgehender Gespräche steuert. Ein weiterer Anschluß C2 der Mikroprozessorschaltung ist über den im Ausgangszustand geöffneten dritten Schalter b3 mit Masse verbunden. Dieser Anschluß dient zur Wahlimpulsaufnahme des Freischaltgerätes FG.

Die Wirkungsweise der Kombination von Sperrvorrichtung SV2 und Freischaltgerät FG ist folgende.

Im Normalbetrieb, in welchem ankommende und abgehende Gespräche geführt werden können, liefert der Sperrsignalgeber SG2 an seinem Ausgang O2 eine Steuersignalspannung, durch die das vierte Relais B4 erregt wird. Dadurch gelangt der Umschalter b4 aus seiner Ausgangslage in die zweite Lage, in welcher er das erste Relais B1 überbrückt. Die Mikroprozessorschaltung P des Freischaltgerätes FG steuert außerdem über den Sperrsignalgeber SG2 und den Rufsignalauswerter RA das zweite Relais B2 in den erregten Zustand, wodurch der zweite Schalter b2 schließt. Über diesen geschlossenen Schalter werden ankommende und abgehende Gesprächsverbindungen hergestellt.

Im Sperrbetrieb gibt die Mikroprozessorschaltung P an ihrem Ausgang C1 eine derartige Signalspannung an den Sperrsignalgeber SG2 ab, daß dieser an seinem Ausgang O2 eine Steuersignalspannung abgibt, die das vierte Relais B4 in den stromlosen Zustand versetzt, in welchem der Umschalter b4 die in Fig. 2 gezeigte Lage einnimmt und das dritte Relais B3 überbrückt. In diesem Zustand arbeitet die Sperrvorrichtung SV2 wie die Sperrvorrichtung SV nach Fig. 1.

Eine vorteilhafte Alternative zu dem Ausführungsbeispiel nach Fig. 2 besteht darin, die Relais B1 und B3 zu einem gemeinsamen Relais zusammenzufassen, das zwei Schalter b1 und b3 steuert. Dadurch entfällt das vierte Relais B4.

...

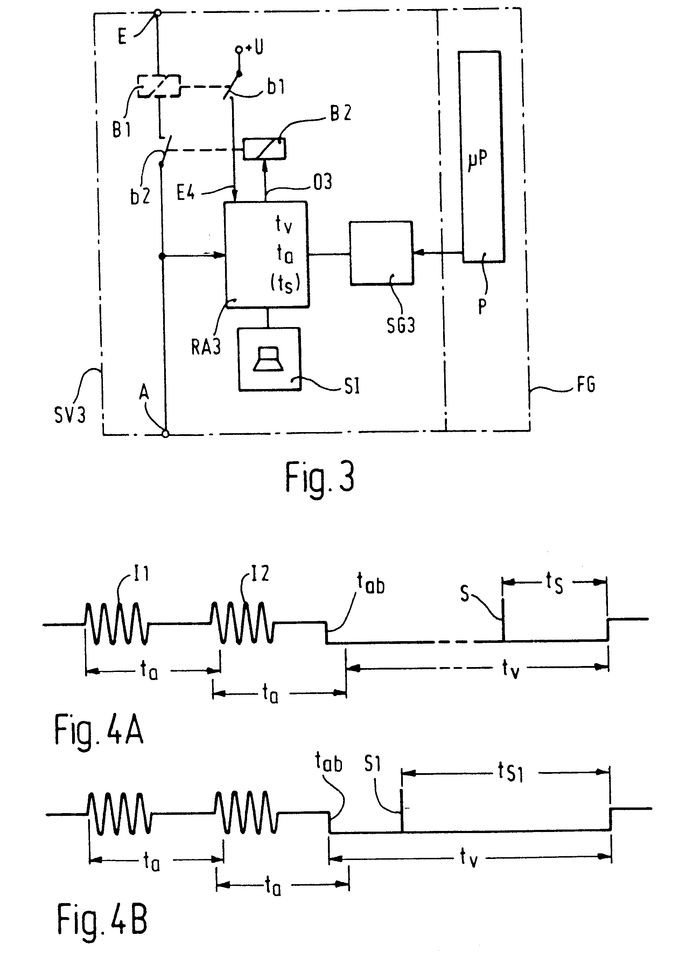

In Fig. 3 ist eine Alternative zu dem Schaltungsbeispiel nach Fig. 2 gezeigt. Danach kommt eine Sperrvorrichtung SV3 ohne ein Schleifenrelais aus. Der Verzicht auf ein Schleifenrelais wird dadurch möglich, daß ein Rufsignalauswerter RA3 einen ersten Zeitkreis mit einer Zeitkonstante $t_a$ und einen zweiten Zeitkreis mit einer Zeitkonstante $t_v$ aufweist. Die Wirkungsweise wird an Hand der Fig. 4A erläutert.

Trifft an dem Anschluß A der Sperrvorrichtung SV3 der erste Rufimpuls I1 ein, so wird dieser von dem Rufsignalauswerter RA3 erkannt. Der Rufsignalauswerter gibt daraufhin an seinem Ausgang O3 eine Signalspannung ab, die das Relais B2 erregt. Dadurch wird der Schalter b2 des Relais B2 geschlossen. Der erste Zeitkreis mit der Zeitkonstante $t_a$ wird mit Beginn des ersten Rufimpulses I1 getriggert, so daß der Schalter b2 auch nach dem Ende des ersten Rufimpulses I1 (vgl. Fig. 4A) geschlossen bleibt. Der nächste Rufimpuls I2 gelangt somit über den geschlossenen Schalter b2 an den mit dem Eingang E verbundenen Fernsprechapparat und wird dort hörbar gemacht.

Wird innerhalb der durch den zweiten Rufimpuls I2 ausgelösten Zeit $t_a$ der Gabelumschalter des Fernsprechapparates geschlossen - Zeitpunkt $t_{ab}$ -, so trifft kein weiterer Rufimpuls an dem Rufsignalauswerter RA3 ein. Ist dann die Zeit $t_a$ abgelaufen, so wird automatisch der zweite Zeitkreis mit der Zeitkonstante $t_v$ gestartet. Nach Ablauf dieser Zeit $t_v$ findet eine Zwangstrennung des Gespräches durch das Öffnen des Schalters b2 statt.

Um dem Fernsprechteilnehmer auf die bevorstehende Zwangstrennung aufmerksam zu machen, weist der Rufsignalauswerter RA einen dritten Zeitkreis mit einer Zeitkonstante $t_s$ auf, der dafür sorgt, daß zu einem Zeitpunkt $t_v - t_s$ ein Warnsignal S erzeugt wird, das einen Signalgeber SI einschaltet. Das Warnsignal kann akustisch und/oder optisch sein.

In Fig. 3 ist angedeutet, daß gegebenenfalls doch ein Schleifenrelais B1 vorgesehen sein kann. In diesem Fall ergibt sich folgende Wirkungsweise.

...

Die Zeit $t_a$ kommt in der gleichen Weise wie im Zusammenhang mit der Fig. 4A beschrieben zur Wirkung. Der Zeitkreis mit der Zeitkonstante $t_v$ wird jedoch durch das Schließen des Gabelumschalters getriggert, und zwar durch das bei geschlossener Teilnehmerschleife erregte Relais B1, dessen dann geschlossener Schalter b1 eine zum Beispiel positive Spannung U an einen Eingang E4 des Rufsignalauswerters RA3 liefert. Auch bei dieser Art der Zwangstrennung kann die im Zusammenhang mit der in Fig. 4A beschriebene Erzeugung eines Warnsignals S1 vorgesehen sein. Die Erzeugung des Warnsignals S bzw. S1 zu dem Zeitpunkt $t_v - t_s$ bzw. $t_v - t_{s1}$ kann maximal so früh erfolgen, daß $t_s = t_v$ ist.

50/85
EK/PLI Scht-Li
11.12.1985

ROBERT BOSCH GMBH, 7000 Stuttgart 1

Ansprüche

1. Elektrische Sperrvorrichtung zum Sperren der von einem Fernsprechapparat abgehenden Gespräche mit einem Sperrsignalgeber,
   der im eingeschalteten Zustand die elektrische Sperrvorrichtung zur Wirkung kommen läßt, dadurch gekennzeichnet, daß die
   elektrische Sperrvorrichtung (SV) einschließlich des Sperrsignalgebers (SG) außerhalb des Fernsprechapparates (F) in
   dessen elektrische Anschlußleitung (L) eingeschleift ist.

2. Elektrische Sperrvorrichtung nach Anspruch 1, dadurch gekennzeichnet, daß zwischen einem dem Fernsprechapparat (F) zugewandten Eingang (E) und einem der Vermittlungsstelle (V) zugewandten Ausgang (A) der elektrischen Sperrvorrichtung (SV) eine
   Serienschaltung aus einem ersten Relais (B1) und zwei parallelgeschalteten Schaltern (b1, b2) liegt, daß der erste Schalter
   (b1) zu dem ersten Relais (B1) und der zweite Schalter (b2) zu
   dem zweiten Relais (B2) gehört, daß das zweite Relais (B2) von
   einem ankommende Rufsignale erkennenden Rufsignalauswerter (RA)
   derart gesteuert wird, daß bei eingeschaltetem Sperrsignalgeber
   (SG) das zweite Relais (B2) den zweiten Schalter (b2) öffnet, daß
   bei an der Sperrvorrichtung eintreffenden Rufsignalen das zweite
   Relais (B2) den zweiten Schalter (b2) schließt und damit die Rufsignale zum Fernsprechapparat (F) gelangen und beim Abheben des
   Handapparates die Fernmeldegleichstromschleife geschlossen wird,
   so daß das erste Relais (B1) schließt und daß der durch das erste
   Relais geschlossene erste Schalter den zweiten Schalter überbrückt
   und dafür sorgt, daß das erste Relais (B1) beim Ausbleiben der
   Rufsignale erregt bleibt.

...

3. Elektrische Sperrvorrichtung nach Anspruch 1, dadurch gekennzeichnet, daß der Sperrsignalgeber (SG) einen Schlüsselschalter (SL) aufweist, der im eingeschalteten Zustand den Sperrsignalgeber ausschaltet und an den Rufsignalauswerter (RA) eine erste Ausgangssignalspannung abgibt, die diesen veranlaßt, eine erste Steuersignalspannung zum Erregen des zweiten Relais (B2) abzugeben und den zugehörigen Schalter (b2) zu schließen, und in nicht eingeschaltetem Zustand an den Rufsignalauswerter eine zweite Ausgangssignalspannung abgibt, die den Rufsignalauswerter veranlaßt, das zweite Relais (B2) stromlos zu schalten und den zweiten Schalter (b2) zu öffnen.

4. Elektrische Sperrvorrichtung nach Anspruch 1, dadurch gekennzeichnet, daß der Sperrsignalgeber (SG) mit einem mit dem Stromnetz verbundenen Netzspannungsausfall-Detektor (N) versehen ist, der bei einem Ausfall der Netzspannung (U) über den Sperrsignalgeber (SG) und den Rufsignalauswerter (RA) den Schalter (b2) des zweiten Relais (B2) öffnet.

5. Elektrische Sperrvorrichtung nach Anspruch 2, dadurch gekennzeichnet, daß die Relais (B1, B2) mit den zugehörigen Schaltern (b1, b2) elektronische Schalter sind.

6. Elektrische Sperrvorrichtung nach Anspruch 1 oder 2, dadurch gekennzeichnet, daß das zweite Relais (B2) ein Stromstoßrelais ist.

7. Elektrische Sperrvorrichtung nach einem der Ansprüche 1 bis 6, dadurch gekennzeichnet, daß die Sperrvorrichtung mit einem Freischaltgerät (FG) kombiniert ist, dessen Schleifenrelais (B3) in Reihe zu dem ersten Relais (B1) liegt.

8. Elektrische Sperrvorrichtung nach Anspruch 7, dadurch gekennzeichnet, daß wahlweise das Schleifenrelais (B3) und das erste Relais (B1) mittels eines Umschalters (b4) überbrückbar sind, der von einem vierten Relais (B4) gesteuert wird, das mit einem Ausgang (02) eines Sperrsignalgebers (SG2) verbunden ist.

...

9. Elektrische Sperrvorrichtung nach Anspruch 7, dadurch gekennzeichnet,
   daß das Schleifenrelais (B3) einen dritten Schalter (b3) steuert,
   der zwischen einem Anschluß (C2) einer Mikroprozessorschaltung (P)
   des Freischaltgerätes (FG) und einem festen Bezugspotential liegt.

10. Elektrische Sperrvorrichtung nach einem der Ansprüche 1 bis 8, dadurch gekennzeichnet, daß der Rufsignalauswerter (RA) eine erste Zeit-
    konstante ($t_a$) aufweist, durch die die Pausen zwischen den Rufsignalen
    überbrückt werden.

11. Elektrische Sperrvorrichtung nach Anspruch 2, dadurch gekennzeichnet,
    daß das erste Relais (B1) eine Zeitkonstante aufweist, die die Speisestromlücken überbrückt.

12. Elektrische Sperrvorrichtung nach Anspruch 2, dadurch gekennzeichnet,
    daß das erste Relais (B1) und das dritte Relais (B3) zu einem Relais
    zusammengefaßt sind.

13. Elektrische Sperrvorrichtung nach Anspruch 10, dadurch gekennzeichnet,
    daß der Rufsignalauswerter (RA2) eine zweite Zeitkonstante ($t_v$) auf-
    weist, durch die ein ankommendes Gespräch nach dem Abheben des Handapparates (H) des Fernsprechapparates (F) nach Ablauf dieser Zeit
    zwangsweise getrennt wird.

14. Elektrische Sperrvorrichtung nach Anspruch 10 oder 13, dadurch gekennzeichnet, daß der Rufsignalauswerter (RA3) einen Zeitkreis mit einer
    dritten Zeitkonstante ($t_s$) aufweist, die zu einem Zeitpunkt ($t_v - t_s$)
    die Teilnehmerschleife unterbricht.

15. Elektrische Sperrvorrichtung nach Anspruch 13, dadurch gekennzeichnet,
    daß bei einem Verzicht auf ein erstes Relais (B1) automatisch nach dem
    Ausbleiben von ankommenden Rufsignalen und nach einer Zeit ($t_a$) nach
    dem Beginn des letzten Rufsignals der Zeitkreis mit der Zeitkonstante
    ($t_v$) getriggert wird und daß am Ende dieser Zeit die Teilnehmerschleife
    unterbrochen wird.

...

16. Elektrische Sperrvorrichtung nach Anspruch 14, dadurch gekennzeichnet, daß das Triggern des Zeitkreises mit der Zeitkonstante ($t_v$) durch das beim Abheben des Handapparates (H) erregte Schleifenrelais (B1) erfolgt, über dessen Schalter (b1) eine feste Gleichspannung (U) an einen Eingang (E4) des Rufsignalauswerters (RA3) gelegt wird.

Fig. 1

Fig. 2

Fig. 3

Fig. 4A

Fig. 4B